# EUROPEAN PATENT APPLICATION

(11) **EP 4 786 520 A1**
(43) Date of publication of application: **05.08.2026**
(21) Application number: 24872294.4
(22) Date of filing: 25.09.2024
(51) Int. Cl.: C08G 65/331, C08G 65/30

(54) **METHOD FOR PRODUCING POLYETHYLENE GLYCOL DERIVATIVE HAVING CARBOXYL GROUP AT TERMINAL**

(30) Priority: 27.09.2023 JP 2023164163
(71) Applicant: NOF Corporation, Shibuya-ku Tokyo 150-6019 (JP)
(72) Inventor: KIMURA, Takato, Kawasaki-shi, Kanagawa 210-0865 (JP); KINOSHITA, Shuhei, Kawasaki-shi, Kanagawa 210-0865 (JP); ICHIKAWA, Takashi, Kawasaki-shi, Kanagawa 210-0865 (JP); NISHIGUCHI, Kosuke, Kawasaki-shi, Kanagawa 210-0865 (JP); ISOBE, Yuuki, Kawasaki-shi, Kanagawa 210-0865 (JP)
(74) Representative: Hoffmann Eitle
(86) International application number: PCT/JP2024/034223
(87) International publication number: WO 2025/070508

(57) **Abstract**

Provided is a method for producing a polyethylene glycol derivative having a carboxyl group at a terminal thereof, the method including Step 1, Step 2, Step 3, and Step 4.
Step 1: a step of subjecting a polyethylene glycol compound to an oxidation reaction using an N-oxyl compound to obtain a polyethylene glycol derivative having a carboxyl group at a terminal thereof, and then quenching the oxidation reaction by adding a reducing agent to obtain a mixed aqueous solution containing a reduced form of the N-oxyl compound and the polyethylene glycol derivative having a carboxyl group at the terminal.
Step 2: a step of mixing the mixed aqueous solution adjusted to pH 3.0 or less with an organic solvent containing one or more selected from the group consisting of aromatic hydrocarbon, carboxylic acid alkyl ester, and halogenated hydrocarbon at a condition of 0°C or higher, so as to separate into an organic layer and an aqueous layer.
Step 3: a step of mixing the organic layer obtained in Step 2 with an aqueous solution having a pH adjusted to 3.0 or less at a condition of 0°C or higher, so as to separate into an organic layer and an aqueous layer.
Step 4: a step of recovering the polyethylene glycol derivative having a carboxyl group at the terminal by concentrating the organic layer obtained in Step 3.

## Description

### TECHNICAL FIELD

The present invention relates to a method for producing a polyethylene glycol derivative having a carboxyl group at a terminal thereof.

### BACKGROUND ART

When a pharmaceutical that uses bio-related substances such as hormones, cytokines, and enzymes is administered into a general living organism, it is promptly excreted from the living organism through glomerular filtration in the kidneys and uptake by macrophages in the liver or spleen. Therefore, a half-life in blood of the pharmaceutical is short, and a sufficient pharmacological effect may not be obtained. To solve this problem, pharmaceuticals have been developed in which bio-related substances are chemically modified with water-soluble polymers such as polyethylene glycol or albumin. It is possible to extend the half-life in blood of the chemically modified bio-related substances by increasing a molecular weight thereof and forming a hydrated layer.

Especially, polyethylene glycol derivatives having a carboxyl group at a terminal thereof are particularly important materials since the polyethylene glycol derivatives can be used as raw materials for being converted to activated esters that form stable amide bonds with lysine residues or N-terminal primary amino groups of proteins, or into other active groups. As PEGylated preparations using polyethylene glycol derivatives having a carboxyl group as raw materials, SOMAVERT (registered trademark): PEGVISOMANT (Pfizer), Mircera (registered trademark): Methoxy Polyethylene glycol-epoetin beta (F Hoffmann-La Roche), Macugen (registered trademark): Pegaptanib (Eyetech), and the like are already on the market. In addition, a large number of other PEGylated formulations are undergoing clinical trials, which proves usefulness thereof.

Methods for producing a polyethylene glycol derivative having a carboxyl group at a terminal thereof are exemplified as follow.
- A method of bonding a terminal hydroxyl group of a polyethylene glycol compound to an acrylic ester compound by the Michael reaction, followed by ester hydrolysis
- A method of bonding a terminal hydroxyl group of a polyethylene glycol to an orthoester compound having a leaving group by the Williamson reaction, followed by hydrolysis
- A method of oxidizing a terminal hydroxyl group of polyethylene glycol using an N-oxyl compound or a derivative thereof

By the oxidation reaction of the terminal hydroxyl group of polyethylene glycol using this N-oxyl compound, a polyethylene glycol derivative having a high carboxylic acid purity is obtained, but after quenching the reaction, a reduced form of the N-oxyl compound is generated as an impurity. Polyethylene glycol derivatives used as pharmaceutical raw materials or pharmaceutical additives are required to have a low level of impurities from the viewpoint of performance and safety of pharmaceuticals. Impurities derived from low molecular weight compounds used to derivatize the terminal of polyethylene glycol can cause unexpected side reactions when chemically modifying a bio-related substance, resulting in generation of impurities in pharmaceuticals and a decrease in the purity of the pharmaceuticals. For this reason, a content of the reduced form of the N-oxyl compound is desired to be low.

Regarding this point, there are few reports on removal of the reduced form of the N-oxyl compound in the synthesis of a polyethylene glycol derivative having a carboxyl group utilizing an oxidation reaction using an N-oxyl compound.

For example, Patent Literature 1 reports that, after converting a terminal hydroxyl group of a polyethylene glycol compound to a carboxylic acid with TEMPO (2,2,6,6-tetramethylpiperidine-N-oxyl) in an aqueous solution, ethanol is added to quench the reaction, and the aqueous layer is washed with ethyl acetate, whereby colored impurities, which are assumed to be reduced forms of TEMPO, migrate to the ethyl acetate layer.

Non-patent Literature 1 reports that after converting the terminal hydroxyl group of polyethylene glycol to a carboxylic acid using TEMPO in an aqueous solution, sodium sulfite is added to quench the reaction, and the aqueous layer is washed with hexane to remove residues of TEMPO.

Furthermore, Non-patent Literature 2 reports that after converting the terminal hydroxyl group of polyethylene glycol to a carboxylic acid using TEMPO in an aqueous solution, low molecular weight impurities used in the reaction are removed by dialysis.

In addition, Patent Literature 2 reports that low molecular weight impurities are removed by adding hexane, which is a poor solvent, to a polyethylene glycol derivative dissolved in heated ethyl acetate to cause reprecipitation.

### PRIOR ART DOCUMENTS

### PATENT LITERATURES

Patent Literature 1: JP2022-162784A
Patent Literature 2: JP2004-197077A

### NON-PATENT LITERATURE

Non Patent Literature 1: Synlett 2018, 29(5), 556-559
Non Patent Literature 2: ACS Macro Letters 2019, 8(7), 826-834

### SUMMARY OF INVENTION

### PROBLEM TO BE SOLVED BY THE INVENTION

Patent Literature 1 and Non-patent Literature 1 do not disclose the residual amount of the residues of TEMPO or a removal efficiency, and it is not clear whether the reduced form of TEMPO can be removed by washing with an organic solvent or by crystallization described in Patent Literature 2. In addition, in Non-patent Literature 1, purification is finally performed by silica gel column chromatography, which requires use of a large amount of solvents and results in a large amount of silica gel becoming waste, making the production method problematic for industrial use. Furthermore, the dialysis described in Non-patent Literature 2 takes a long time of two days, and freeze-drying must be performed after dialysis, making the production method complicated to operate and problematic for industrial use.

Accordingly, although the oxidation reaction using an N-oxyl compound is useful for obtaining a polyethylene glycol derivative having a carboxyl group at a terminal thereof at a high purity of a carboxylation rate, there remains a problem in that no easy method has been established for separating the reduced form of the N-oxyl compound produced by quenching after the reaction from the polyethylene glycol derivative, without performing purification using industrially complicated methods as the column or dialysis.

In view of the above problem, an object of the present invention is to provide a production method capable of removing a reduced form of an N-oxyl compound contained in a polyethylene glycol derivative having a carboxyl group at a terminal thereof by an industrially simple method, thereby obtaining a polyethylene glycol derivative having a small residual amount of the reduced form of the N-oxyl compound.

### MEANS FOR SOLVING THE PROBLEM

As a result of diligent research by the present inventors to solve the above problem, it has been found that a reduced form of an N-oxyl compound can be removed by adjusting the pH of a mixed aqueous solution of a polyethylene glycol derivative having a carboxyl group at a terminal thereof and the reduced form of the N-oxyl compound to a specific value or less, performing extraction with an aromatic hydrocarbon, a carboxylic acid alkyl ester or a halogenated hydrocarbon, and then washing an organic layer containing a mixture of the polyethylene glycol derivative having a carboxyl group at a terminal thereof and the reduced form of the N-oxyl compound with an aqueous solution whose pH is adjusted to a specific value or less, thereby obtaining a polyethylene glycol derivative having a small residual amount of the reduced form of the N-oxyl compound.

That is, the present invention is as follows. [1] A method for producing a polyethylene glycol derivative having a carboxyl group at a terminal thereof, the method including the following Step 1, Step 2, Step 3 and Step 4:
Step 1:
   a step of subjecting a polyethylene glycol compound having a molecular weight of 1,000 to 80,000 and having a hydroxyl group or an aldehyde group at a terminal thereof to an oxidation reaction using an N-oxyl compound to obtain a polyethylene glycol derivative having a carboxyl group at a terminal thereof, and then quenching the oxidation reaction by adding a reducing agent to obtain a mixed aqueous solution containing a reduced form of the N-oxyl compound and the polyethylene glycol derivative having a carboxyl group at the terminal;
Step 2:
   an extraction step of mixing the mixed aqueous solution adjusted to pH 3.0 or less with an organic solvent containing one or more selected from the group consisting of aromatic hydrocarbon, carboxylic acid alkyl ester, and halogenated hydrocarbon at a condition of 0°C or higher, so as to separate into an organic layer and an aqueous layer;
Step 3:
   a water-washing step of mixing the organic layer obtained in the Step 2 with an aqueous solution having a pH adjusted to 3.0 or less at a condition of 0°C or higher, so as to separate into an organic layer and an aqueous layer; and
Step 4:
   a recovery step of recovering the polyethylene glycol derivative having a carboxyl group at the terminal by concentrating the organic layer obtained in the Step 3.

[2] The method according to [1], in which the polyethylene glycol derivative having a carboxyl group at the terminal is a linear polyethylene glycol, a branched polyethylene glycol, or a multi-arm polyethylene glycol.

[3] The method according to [1] or [2], in which an average molecular weight of the polyethylene glycol derivative having a carboxyl group at the terminal is 1,000 to 80,000.

[4] The method according to any one of [1] to [3], in which an acid used to adjust the pH of the mixed aqueous solution in the Step 2 and the aqueous solution in the Step 3 is an acid having an octanol-water partition coefficient of 0.5 or less and a pKa of 6 or less.

### EFFECTS OF INVENTION

According to the present invention, the reduced form of the N-oxyl compound contained in the polyethylene glycol derivative having a carboxyl group at the terminal thereof can be removed to obtain a polyethylene glycol derivative containing a low content of the reduced form of the N-oxyl compound. This production method makes it possible to obtain a polyethylene glycol derivative having a carboxyl group at a terminal thereof and a low content of the reduced form of the N-oxyl compound, without performing purification unsuitable for industrial production, such as silica gel column purification or dialysis.

### BRIEF DESCRIPTION OF DRAWINGS

FIG. 1 illustrates an NMR chart obtained before purification in Example 1.
FIG. 2 illustrates an NMR chart obtained after the purification in Example 1.

### EMBODIMENTS FOR CARRYING OUT THE INVENTION

The present invention is a method for producing a polyethylene glycol derivative having a carboxyl group at a terminal thereof, the method including the above Step 1, Step 2, Step 3, and Step 4.

### (Polyethylene Glycol Compound Having Hydroxyl Group or Aldehyde Group at Terminal Thereof as Raw Material)

The polyethylene glycol compound is preferably represented by Formula (1), Formula (2), or Formula (3).
[Chem. 1]

F₁-L₁-L₂-POLY-L₃-L₄-F₂ (1)

Here, POLY represents a linear polyethylene glycol moiety. Preferably, POLY represents -CH₂CH₂O-(CH₂CH₂O)ₙ-CH₂CH₂-.

F₁ represents a hydroxyl group or an aldehyde group.

F₂ represents an alkyl group having 1 to 24 carbon atoms (preferably 1 to 4 carbon atoms), an amino group, a protecting group for an amino group, a hydroxyl group or a protecting group for a hydroxyl group, or an aldehyde group.

Examples of the protecting group for an amino group include a t-butoxycarbonyl protecting group, a 9-fluorenylmethyloxycarbonyl protecting group, an allyloxycarbonyl protecting group, a benzyloxycarbonyl protecting group, a 2,2,2-trichloroethoxycarbonyl protecting group, a mesyl protecting group, a tosyl protecting group, a nosyl protecting group, a triflyl protecting group, a trimethylsilyl protecting group, a triethylsilyl protecting group, a triisopropylsilyl protecting group, a t-butyldimethylsilyl protecting group, a t-butyldiphenylsilyl protecting group, an acetyl protecting group, a benzoyl protecting group, a pivaloyl protecting group, a trityl protecting group, a monomethyltrityl protecting group, and a dimethyltrityl protecting group.

Examples of the protecting group for a hydroxyl group include a methyl protecting group, a t-butyl protecting group, a benzyl protecting group, an alkoxymethyl protecting group, a 2-tetrahydropyranyl protecting group, a benzyloxymethyl protecting group, a mesyl protecting group, a tosyl protecting group, a nosyl protecting group, a triflyl protecting group, a trimethylsilyl protecting group, a triethylsilyl protecting group, a triisopropylsilyl protecting group, a t-butyldimethylsilyl protecting group, a t-butyldiphenylsilyl protecting group, an acetyl protecting group, a benzoyl protecting group, a pivaloyl protecting group, a trityl protecting group, a monomethyltrityl protecting group, and a dimethyltrityl protecting group.

L₁ and L₄ each independently represent an alkyl group having 1 to 10 carbon atoms, and when F₂ represents an alkyl group, L₄ represents a single bond.

L₂ and L₃ each represent an ether bond, an ester bond, an amide bond, a urethane bond, or a carbonate bond, and when F₂ represents an alkyl group, L₃ represents an ether bond.

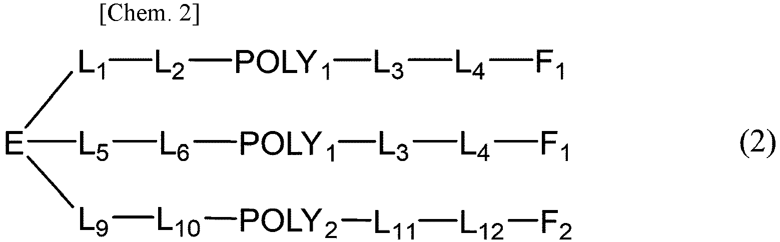

In Formula (2), POLY₁ represents a linear polyethylene glycol moiety, and specifically represents -CH₂CH₂O-(CH₂CH₂O)ₙ-CH₂CH₂-.

POLY₂ represents a similar linear polyethylene glycol moiety or a single bond. However, average molecular weights of both linear polyethylene glycols may be the same or different.

E represents a methine group or a nitrogen atom bonded to L₁, L₅, and L₉.

L₁, L₄, L₅, L₉ and L₁₂ each independently represent an alkyl group having 1 to 10 carbon atoms or a single bond, and when POLY₂ represents a single bond, L₉ and L₁₂ each represent an alkyl group having 1 to 10 carbon atoms or a single bond.

L₂, L₃, L₆, L₁₀ and L₁₁ each independently represent an ether bond, an ester bond, an amide bond, a urethane bond, or a carbonate bond, and when POLY₂ represents a single bond, L₁₀ represents an ether bond, an ester bond, an amide bond, a urethane bond, a carbonate bond, or a single bond, and L₁₁ represents a single bond.

F₁ represents an alkyl group having 1 to 24 carbon atoms (preferably 1 to 4 carbon atoms), an amino group, a protecting group for an amino group, a hydroxyl group or a protecting group for a hydroxyl group, or an aldehyde group.

Examples of the protecting group for an amino group include a t-butoxycarbonyl protecting group, a 9-fluorenylmethyloxycarbonyl protecting group, an allyloxycarbonyl protecting group, a benzyloxycarbonyl protecting group, a 2,2,2-trichloroethoxycarbonyl protecting group, a mesyl protecting group, a tosyl protecting group, a nosyl protecting group, a triflyl protecting group, a trimethylsilyl protecting group, a triethylsilyl protecting group, a triisopropylsilyl protecting group, a t-butyldimethylsilyl protecting group, a t-butyldiphenylsilyl protecting group, an acetyl protecting group, a benzoyl protecting group, a pivaloyl protecting group, a trityl protecting group, a monomethyltrityl protecting group, and a dimethyltrityl protecting group. Examples of the protecting group for a hydroxyl group include a methyl protecting group, a t-butyl protecting group, a benzyl protecting group, an alkoxymethyl protecting group, a 2-tetrahydropyranyl protecting group, a benzyloxymethyl protecting group, a mesyl protecting group, a tosyl protecting group, a nosyl protecting group, a triflyl protecting group, a trimethylsilyl protecting group, a triethylsilyl protecting group, a triisopropylsilyl protecting group, a t-butyldimethylsilyl protecting group, a t-butyldiphenylsilyl protecting group, an acetyl protecting group, a benzoyl protecting group, a pivaloyl protecting group, a trityl protecting group, a monomethyltrityl protecting group, and a dimethyltrityl protecting group.

F₂ represents a hydroxyl group or an aldehyde group.

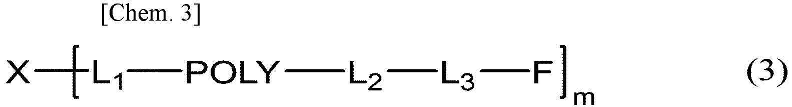

In Formula (3), X represents a residue obtained by removing a hydroxyl group from a compound selected from the group consisting of glycerol, trimethylolpropane, pentaerythritol, xylitol, dipentaerythritol, hexaglycerol, dicylitol, disucrose, and tripentaerythritol.

POLY represents a linear polyethylene glycol moiety, and specifically represents - CH₂CH₂O-(CH₂CH₂O)ₙ-CH₂CH₂-.

L₁ represents an ether bond.

L₂ represents an ether bond, an ester bond, an amide bond, a urethane bond, or a carbonate bond.

L₃ represents an alkyl group having 1 to 10 carbon atoms (preferably 2 to 6 carbon atoms).

F represents a hydroxyl group or an aldehyde group, and

m is 3 to 8 depending on the structure of X.

In a particularly preferred embodiment, in Formula (1), F₁ represents a hydroxyl group, L₁ represents an alkyl group having 2 carbon atoms, L₂ represents an ether bond, and F₂, L₃, L₄ each represent a methyl group, an ether bond, a single bond, a hydroxyl group, an ether bond, or an alkyl group having 2 carbon atoms. In a particularly preferred embodiment, in Formula (2), E represents a methine group, L₁ represents a methylene group having 1 carbon atom, L₂ represents an ether bond, L₃ represents an ether bond, L₄ represents a single bond, F₁ represents a methyl group, L₅ represents a single bond, L₆ represents an ether bond, L₉ represents a methylene group having 1 carbon atom, L₁₀, POLY₂, L₁₁, and L₁₂ each represent a single bond, and F₂ represents a hydroxyl group. In a particularly preferred embodiment, in Formula (3), X represents a pentaerythritol residue, L₂ represents an ether bond, L₃ represents an alkyl group having 2 carbon atoms, and F represents a hydroxyl group.

### (Polyethylene Glycol Derivative Having Carboxyl Group at Terminal)

The polyethylene glycol derivative having a carboxyl group at a terminal thereof is preferably a linear polyethylene glycol, a branched polyethylene glycol, or a multi-arm polyethylene glycol represented by Formula (4), Formula (5), or Formula (6).
[Chem. 4]

F₁-L₁-L₂-POLY-L₃-L₄-F₂ (4)

In Formula (4), POLY represents a linear polyethylene glycol moiety, and specifically represents -CH₂CH₂O-(CH₂CH₂O)ₙ-CH₂CH₂-.

F₁ represents a carboxyl group.

F₂ represents an alkyl group having 1 to 24 carbon atoms (preferably 1 to 4 carbon atoms), a carboxyl group, an amino group, a protecting group for an amino group, or a protecting group for a hydroxyl group. Preferred examples of the protecting group for an amino group include a t-butoxycarbonyl protecting group, a 9-fluorenylmethyloxycarbonyl protecting group, an allyloxycarbonyl protecting group, a benzyloxycarbonyl protecting group, a 2,2,2-trichloroethoxycarbonyl protecting group, a mesyl protecting group, a tosyl protecting group, a nosyl protecting group, a triflyl protecting group, a trimethylsilyl protecting group, a triethylsilyl protecting group, a triisopropylsilyl protecting group, a t-butyldimethylsilyl protecting group, a t-butyldiphenylsilyl protecting group, an acetyl protecting group, a benzoyl protecting group, a pivaloyl protecting group, a trityl protecting group, a monomethyltrityl protecting group, and a dimethyltrityl protecting group. Preferred examples of the protecting group for a hydroxyl group include a methyl protecting group, a t-butyl protecting group, a benzyl protecting group, an alkoxymethyl protecting group, a 2-tetrahydropyranyl protecting group, a benzyloxymethyl protecting group, a mesyl protecting group, a tosyl protecting group, a nosyl protecting group, a triflyl protecting group, a trimethylsilyl protecting group, a triethylsilyl protecting group, a triisopropylsilyl protecting group, a t-butyldimethylsilyl protecting group, a t-butyldiphenylsilyl protecting group, an acetyl protecting group, a benzoyl protecting group, a pivaloyl protecting group, a trityl protecting group, a monomethyltrityl protecting group, and a dimethyltrityl protecting group.

L₁ and L₄ each independently represent an alkyl group having 1 to 10 carbon atoms, and when F₂ represents an alkyl group, L₄ represents a single bond.

L₂ and L₃ each independently represent an ether bond, an ester bond, an amide bond, a urethane bond, or a carbonate bond, and when F₂ represents an alkyl group, L₃ represents an ether bond.

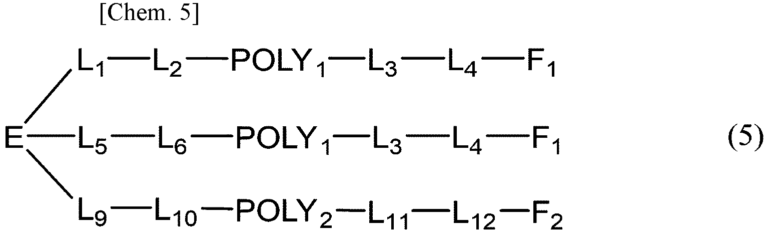

In Formula (2), POLY₁ represents a linear polyethylene glycol moiety, and specifically represents -CH₂CH₂O-(CH₂CH₂O)ₙ-CH₂CH₂-.

POLY₂ represents a similar linear polyethylene glycol moiety or a single bond. However, average molecular weights of both linear polyethylene glycols may be the same or different.

E represents a methine group or a nitrogen atom bonded to L₁, L₅, and L₉.

L₁, L₄, L₅, L₉, and L₁₂ each independently represent an alkyl group having 1 to 10 carbon atoms or a single bond (preferably L₁, L₅, and L₉ each represent an alkyl group having 1 to 4 carbon atoms or a single bond, and L₄ and L₁₂ each represent an alkyl group having 1 to 5 carbon atoms or a single bond), and when POLY₂ represents a single bond, L₉ and L₁₂ each independently represent an alkyl group having 1 to 10 carbon atoms or a single bond.

L₂, L₃, L₆, L₁₀ and L₁₁ each independently represent an ether bond, an ester bond, an amide bond, a urethane bond, or a carbonate bond, and when POLY2 represents a single bond, L₁₀ represents an ether bond, an ester bond, an amide bond, a urethane bond, a carbonate bond, or a single bond, and L₁₁ represents a single bond.

F₁ represents an alkyl group having 1 to 24 carbon atoms (preferably 1 to 4 carbon atoms), a carboxyl group, an amino group, a protecting group for an amino group, or a protecting group for a hydroxyl group. Examples of the protecting group for an amino group include a t-butoxycarbonyl protecting group, a 9-fluorenylmethyloxycarbonyl protecting group, an allyloxycarbonyl protecting group, a benzyloxycarbonyl protecting group, a 2,2,2-trichloroethoxycarbonyl protecting group, a mesyl protecting group, a tosyl protecting group, a nosyl protecting group, a triflyl protecting group, a trimethylsilyl protecting group, a triethylsilyl protecting group, a triisopropylsilyl protecting group, a t-butyldimethylsilyl protecting group, a t-butyldiphenylsilyl protecting group, an acetyl protecting group, a benzoyl protecting group, a pivaloyl protecting group, a trityl protecting group, a monomethyltrityl protecting group, and a dimethyltrityl protecting group. Examples of the protecting group for a hydroxyl group include a methyl protecting group, a t-butyl protecting group, a benzyl protecting group, an alkoxymethyl protecting group, a 2-tetrahydropyranyl protecting group, a benzyloxymethyl protecting group, a mesyl protecting group, a tosyl protecting group, a nosyl protecting group, a triflyl protecting group, a trimethylsilyl protecting group, a triethylsilyl protecting group, a triisopropylsilyl protecting group, a t-butyldimethylsilyl protecting group, a t-butyldiphenylsilyl protecting group, an acetyl protecting group, a benzoyl protecting group, a pivaloyl protecting group, a trityl protecting group, a monomethyltrityl protecting group, and a dimethyltrityl protecting group.

F₂ represents a carboxyl group.

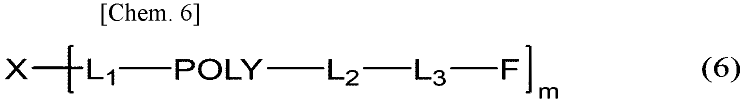

In Formula (6), X represents a residue obtained by removing a hydroxyl group from a compound selected from the group consisting of glycerol, trimethylolpropane, pentaerythritol, xylitol, dipentaerythritol, hexaglycerol, dicylitol, disucrose, and tripentaerythritol.

POLY represents a linear polyethylene glycol moiety, and specifically represents - CH₂CH₂O-(CH₂CH₂O)ₙ-CH₂CH₂-.

L₁ represents an ether bond.

L₂ represents an ether bond, an ester bond, an amide bond, a urethane bond, or a carbonate bond.

L₃ represents an alkyl group having 1 to 10 carbon atoms (preferably 1 to 5 carbon atoms),

F represents a carboxyl group, and

m represents 3 to 8 depending on the structure of X.

In a particularly preferred embodiment, in Formula (4), F₁ represents a carboxyl group, L₁ represents an alkyl group having 1 carbon atom, L₂ represents an ether bond, and F₂, L₃, and L₄ each represent a methyl group, an ether bond, a single bond, a carboxyl group, an ether bond, or an alkyl group having 1 carbon atom. In a preferred embodiment, in Formula (2), E represents a methine group, L₁ represents a methylene group having 1 carbon atom, L₂ represents an ether bond, L₃ represents an ether bond, L₄ represents a single bond, F₁ represents a methyl group, L₅ represents a single bond, L₆ represents an ether bond, L₉, L₁₀, POLY₂, L₁₁, and L₁₂ each represent a single bond, and F₂ represents a carboxyl group. In a preferred embodiment, in Formula (3), X represents a residue obtained by removing a hydroxyl group from pentaerythritol, L₂ represents an ether bond, L₃ represents an alkyl group having 1 carbon atom, and F represents a carboxyl group.

A weight average molecular weight of the polyethylene glycol derivative having a carboxyl group at a terminal thereof ranges from 1,000 to 80,000, preferably from 1,000 to 40,000, and more preferably from 2,000 to 40,000.

### (Step 1)

Step 1 is a step of subjecting the polyethylene glycol compound to an oxidation reaction using an N-oxyl compound to obtain a polyethylene glycol derivative having a carboxyl group at a terminal thereof, and then quenching the oxidation reaction by adding a reducing agent to obtain a mixed aqueous solution containing a reduced form of the N-oxyl compound and the polyethylene glycol derivative having a carboxyl group at the terminal.

The N-oxyl compound may be TEMPO (2,2,6,6-tetramethylpiperidine-N-oxyl), a TEMPO derivative, or a combination thereof. The TEMPO derivative may be a TEMPO derivative having a methoxy group, a hydroxyl group, a carboxyl group, an oxo group, a cyano group, an acetamide group, a dimethylamino group, a methacryloyloxy group, a bromoacetamide group, an iodoacetamide group, a glycidyloxy group, a phosphonooxy group, a propynyloxy group, an isothiocyanate group, or a benzoyloxy group at the 4-position on the piperidine ring of TEMPO. In a particularly preferred embodiment, TEMPO or a TEMPO derivative having a methoxy group, a hydroxyl group, an oxo group, or an acetamide group at the 4-position on the piperidine ring of TEMPO, or a combination thereof, can be selected, with TEMPO being particularly preferred.

During the oxidation reaction, it is preferable to add a reoxidant to the reaction system.

The reoxidant is an oxidant capable of activating the N-oxyl compound, and is selected from any one of or a combination of hypohalous acids or salts thereof (hypochlorous acids or salts thereof, hypobromous acids or salts thereof, hypoiodous acids or salts thereof), halogenous acids or salts thereof (chlorous acids or salts thereof, bromous acids or salts thereof, iodous acids or salts thereof), perhalogen acids or salts thereof (perchloric acids or salts thereof, periodic acids or salts thereof), halogen (chlorine, bromine, iodine), halogen oxides (chlorine monoxide, chlorine dioxide, dichlorine hexoxide, bromine dioxide), nitrogen oxides (nitric oxide, nitrogen dioxide, dinitrogen trioxide, and the like), and peracids (hydrogen peroxides, peracetic acids, persulfuric acids, perbenzoic acids, and the like). An alkali metal hypohalite is preferred, and sodium hypochlorite is more preferred.

The oxidation reaction is preferably performed in a buffer solution.

This buffer solution is a neutral or weakly basic buffer solution, and is selected from Good's buffer solutions such as a 2-morpholinoethanesulfonic acid buffer solution, as well as any one of phosphate buffer solutions, bicarbonate buffer solutions, carbonate buffer solutions, ammonium buffer solutions, the TRIS buffer solution, citrate buffer solutions, borate buffer solutions, or a combination thereof. A bicarbonate buffer solution is preferred.

Water may be used instead of the buffer solution. In this case, it is preferable to maintain the pH at a neutral level to a weakly basic level by appropriately adding an inorganic base such as sodium hydroxide, potassium hydroxide, sodium carbonate, potassium carbonate, sodium bicarbonate, disodium hydrogen phosphate, trisodium phosphate, or ammonia during the reaction.

In addition, bromides or iodides may be added as activators for the oxidation reaction, and are selected from any one of ammonium salts (ammonium bromide, ammonium iodide), alkali metal bromides or iodides (bromides such as lithium bromide, potassium bromide, sodium bromide, and iodides such as lithium iodide, potassium iodide, and sodium iodide), alkaline earth metal bromides or iodides (calcium bromide, magnesium bromide, strontium bromide, calcium iodide, magnesium iodide, strontium iodide), or a combination thereof.

A temperature at which the oxidation reaction is performed is 0°C or higher, preferably 0°C to 40°C, more preferably 0°C to 20°C, and particularly preferably 0°C to 10°C.

The reducing agent is a compound that has a reducing effect on the activated N-oxyl compound and the reoxidant, and is selected from any one of primary alcohols having 1 to 24 carbon atoms, and aldehydes, hydrazine compounds, citric acids and salts thereof, succinic acids and salts thereof, ascorbic acids and salts thereof, isoascorbic acids and salts thereof, sulfurous acids and salts thereof, oxalic acids and salts thereof, and formic acids and salts thereof corresponding to the primary alcohols, or a combination thereof, and is preferably any one of sodium ascorbate, sodium isoascorbate, and sodium sulfite, and more preferably sodium isoascorbate.

### (Step 2)

Step 2 is a step of adjusting the pH of the mixed aqueous solution in Step 1 to 3.0 or less, and mixing with an organic solvent containing one or more selected from the group consisting of aromatic hydrocarbon, carboxylic acid alkyl ester, and halogenated hydrocarbon at a condition of 0°C or higher, so as to separate into an organic layer and an aqueous layer.

The acid used to adjust the pH of the mixed aqueous solution is preferably an acid having an octanol-water partition coefficient of 0.5 or less and a pKa of 6 or less, or a mixture of two or more of such acids. Inorganic acids having an octanol-water partition coefficient of 0.5 or less and a pKa of 6 or less are particularly preferred, and hydrochloric acids, sulfuric acids, and phosphoric acids are more preferred.

From the viewpoint of the present invention, the pH of the mixed aqueous solution is adjusted to 3.0 or less, and the pH is preferably 2 or less. From the viewpoint of preventing deterioration of the polyethylene glycol chains, it is preferable that the pH of the mixed aqueous solution is 1 or higher.

A solvent for the organic layer is an organic solvent containing one or more selected from the group consisting of aromatic hydrocarbon, carboxylic acid alkyl ester, and halogenated hydrocarbon. Here, the aromatic hydrocarbon is preferably an aromatic silicon carbide such as toluene or xylene. The carboxylic acid alkyl ester preferably has 1 to 4 carbon atoms, and is preferably an alkyl acetate, and is particularly preferably methyl acetate, ethyl acetate, or butyl acetate. The halogenated hydrocarbon preferably has 1 to 4 carbon atoms, and is preferably methylene chloride or chloroform.

The organic solvent may solely contain one or more solvents selected from the group consisting of aromatic hydrocarbon, carboxylic acid alkyl ester, and halogenated hydrocarbon. Alternatively, an organic solvent other than the solvents mentioned above may also be contained, and examples of such an organic solvent include aliphatic hydrocarbons such as hexane and heptane, and alcohols such as methanol and ethanol. When an organic solvent other than aromatic hydrocarbon, carboxylic acid alkyl ester, and halogenated hydrocarbon is contained, a proportion of such an organic solvent is preferably 5 mass% or less, and more preferably 1 mass% or less.

A temperature at which Step 2 is performed may be changed as appropriate depending on a type and a boiling point of the solvent, and is preferably in a wide range of 0°C to 60°C. When the aromatic hydrocarbon is contained, the temperature at which Step 2 is performed is preferably 30°C or higher, more preferably 45°C or higher, and particularly preferably 55°C. When the halogenated hydrocarbon is contained, the temperature at which Step 2 is performed is 5°C or higher, preferably 15°C or higher, and more preferably 25°C or higher.

A time required for Step 2 is 5 minutes or more, preferably 15 minutes or more, and more preferably 30 minutes or more.

### (Step 3)

Step 3 is a water-washing step of mixing the organic layer obtained in Step 2 with an aqueous solution having a pH adjusted to 3 or less at a condition of 0°C or higher, so as to separate into an organic layer and an aqueous layer.

In Step 3, an acid used to adjust the pH of the aqueous solution is preferably an acid having an octanol-water partition coefficient of 0.5 or less and a pKa of 6 or less, or a mixture of two or more of such acids. Inorganic acids having an octanol-water partition coefficient of 0.5 or less and a pKa of 6 or less are particularly preferred, and hydrochloric acids, sulfuric acids, and phosphoric acids are more preferred.

From the viewpoint of the present invention, the pH of the aqueous solution is adjusted to 3 or less, and the pH is preferably 2 or less. From the viewpoint of preventing deterioration of the polyethylene glycol chains, it is preferable that the pH of the aqueous solution is 1 or higher.

A temperature at which Step 3 is performed may be changed as appropriate depending on a type and a boiling point of the solvent, and is preferably in a wide range of 0°C to 60°C. When the aromatic hydrocarbon is contained, the temperature at which Step 2 is performed is preferably 30°C or higher, more preferably 45°C or higher, and particularly preferably 55°C. When the halogenated hydrocarbon is contained, the temperature at which Step 2 is performed is preferably 5°C or higher, more preferably 15°C or higher, and particularly preferably 25°C or higher.

A time required for Step 3 is 5 minutes or more, preferably 15 minutes or more, and more preferably 30 minutes or more. From the viewpoint of the present invention, it is preferable to perform Step 3 two times or more. From the viewpoint of productivity and effect, it is preferable to perform Step 3 three times or less.

### (Step 4)

Step 4 is a step of recovering the polyethylene glycol derivative having a carboxyl group at the terminal by concentrating the organic layer obtained in the Step 3.

A concentration method is not limited, and drying in reduced pressure or in vacuum is preferred. Crystals obtained by concentration can be further reprecipitated and recovered. Examples of a good solvent for the reprecipitation include ethyl acetate and toluene, and examples of a poor solvent include hexane.

According to the present invention, it is possible to obtain a composition of the polyethylene glycol derivative having a carboxyl group at the terminal, in which a content of the reduced form of the N-oxyl compound is 0.1 mol% to 1.0 mol% (more preferably 0.1 mol% to 0.8 mol%).

### EXAMPLES

The present invention will be described in more detail below with reference to Examples. Note that in the Examples, the content of the reduced form of the N-oxyl compound in the polyethylene glycol derivative having a carboxyl group at the terminal was measured using ¹H-NMR. For the ¹H-NMR analysis, "JNM-ECP400" and "JNM-ECA600" manufactured by JEOL Datum Co., Ltd. were used.

### (Example 1)

Into a 500 mL four-neck flask, 25 g (12.5 mmol) of linear polyethylene glycol having a molecular weight of 2,000 and a hydroxyl group at one terminal and a methoxy group at the other terminal, 98 mg of TEMPO (Tokyo Chemical Industry Co., Ltd., 0.6 mmol), 7 g of sodium bicarbonate (KANTO CHEMICAL CO.,INC.), and 140 g of ion-exchanged water were charged, heated under a nitrogen atmosphere, and dissolved at 40°C. Over 30 minutes, 37.2 g of a sodium hypochlorite solution (KANTO CHEMICAL CO.,INC., available chlorine concentration 6.0%) was added dropwise, and an oxidation reaction was performed at 40°C for 1 hour and 40 minutes. After the oxidation reaction, 1.24 g of sodium ascorbate (KANTO CHEMICAL CO.,INC.) was charged at 25°C, and the mixture was stirred for 30 minutes to quench the oxidation reaction (Step 1).

After the quenching, 6 mol/L hydrochloric acid (KANTO CHEMICAL CO.,INC.) was added to adjust the pH to 2.0, and 125 g of chloroform was added, followed by stirring at 25°C for 15 minutes. After the separation into layers, a chloroform layer was recovered, and 125 g of chloroform was added to an aqueous layer again, followed by the same operation (Extraction Step 2).

The obtained chloroform layers were combined and homogenized, and then 125 g of an aqueous solution of hydrochloric acid having a pH adjusted to 2.0 was added, followed by stirring at 15°C for 15 minutes. After the separation into layers, the chloroform layer was recovered (Water-washing Step 3). Step 3 was repeated two more times in the same manner.

Next, chloroform was distilled off from the chloroform layer, and 63 g of ethyl acetate was added and dissolved at 40°C. Magnesium sulfate (KANTO CHEMICAL CO.,INC.) was added in an amount of 2.5 g, followed by stirring at 40°C for 30 minutes, and then the magnesium sulfate was filtered out. The filtrate was cooled to 20°C, and 150 g of hexane was added to precipitate crystals, which were then filtered out. To the obtained crystals, 100 g of hexane was added and stirred, and then the mixture was filtered again and dried in vacuum to recover the crystals (recovery step: yield 85%).

Changes in the content of the reduced form of TEMPO after Step 1, Extraction Step 2, and Water-washing Step 3 are shown in Table 1.

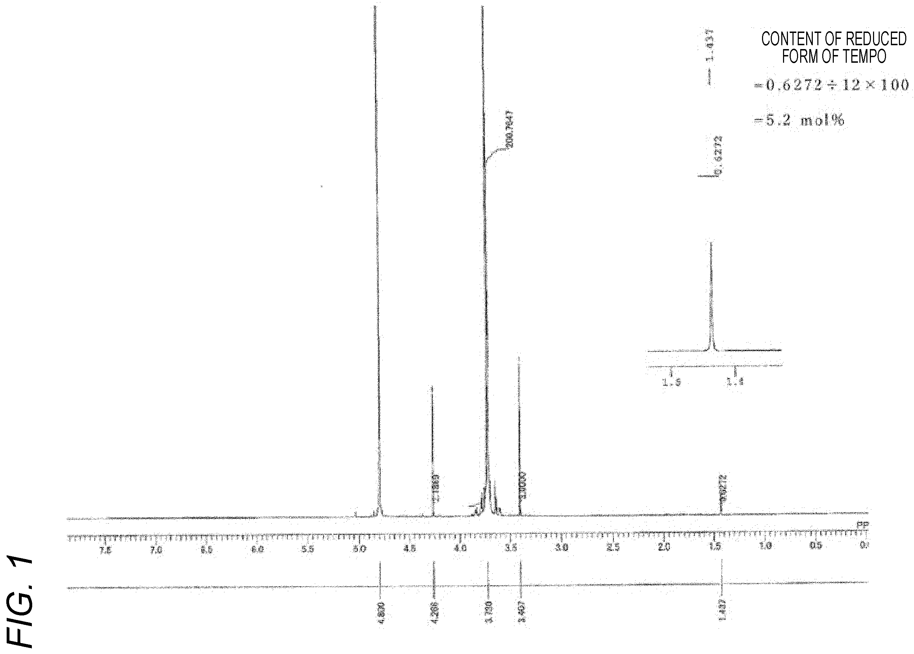

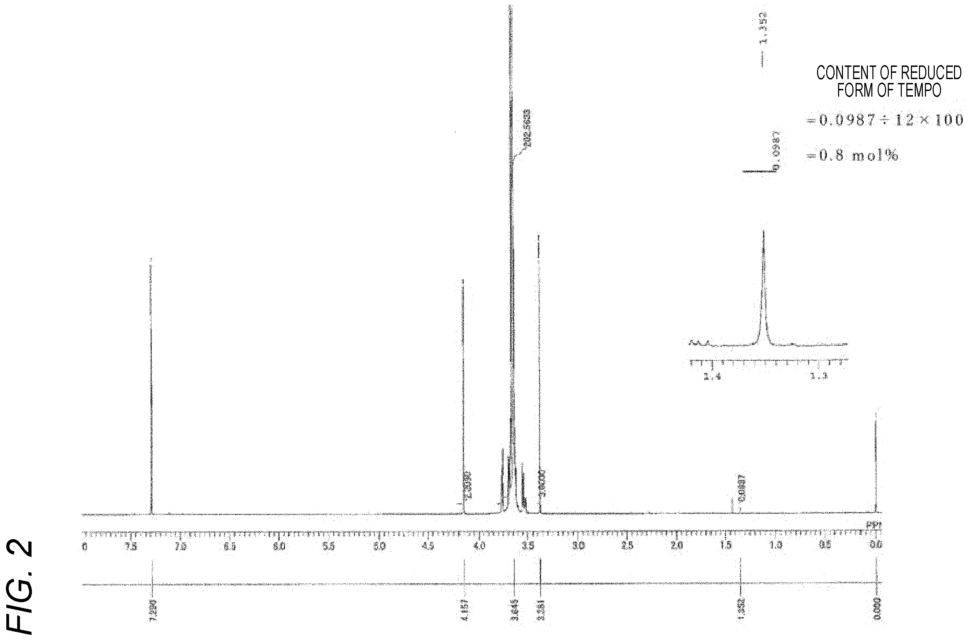

FIG. 1 illustrates an NMR chart of the mixture after Step 1 (before purification) in Example 1, and FIG. 2 illustrates an NMR chart of the purified product after performing Water-washing Step 3 three times in Example 1.

**[Table 1]**

| Step | Content (mol%) of reduced form of TEMPO |
|---|---|
| After Step 1 | 5.2 |
| After Extraction Step 2 | 2.3 |
| After performing Water-washing Step 3 once | 1.5 |
| After performing Water-washing Step 3 three times | 0.8 |

### (Example 2)

Into a 500 mL four-neck flask, 25 g (12.5 mmol) of linear polyethylene glycol having a molecular weight of 2,000 and a hydroxyl group at one terminal and a methoxy group at the other terminal, 98 mg (0.6 mmol) of TEMPO, 7 g of sodium bicarbonate, and 140 g of ion-exchanged water were charged, heated under a nitrogen atmosphere, and dissolved at 40°C. Over 30 minutes, 37.2 g of a sodium hypochlorite solution (available chlorine concentration 6.0%) was added dropwise, and an oxidation reaction was performed at 40°C for 1 hour and 40 minutes. After the oxidation reaction, 1.24 g of sodium ascorbate was charged at 25°C, and the mixture was stirred for 30 minutes to quench the oxidation reaction (Step 1).

After the quenching, 6 mol/L hydrochloric acid was added to the mixed aqueous solution to adjust the pH to 1.5, and 125 g of chloroform was added, followed by stirring at 25°C for 15 minutes. After the separation into layers, a chloroform layer was recovered, and 125 g of chloroform was added to an aqueous layer again, followed by the same operation. The obtained chloroform layers were combined and homogenized (Extraction Step 2).

Next, 125 g of an aqueous solution of hydrochloric acid having a pH adjusted to 1.5 was added to the chloroform layer, followed by stirring at 15°C for 15 minutes. After the separation into layers, the chloroform layer was recovered (Water-washing Step 3). Water-washing Step 3 was repeated two more times in the same manner.

Next, chloroform was distilled off from the chloroform layer, and 63 g of ethyl acetate was added and dissolved at 40°C. Magnesium sulfate was added in an amount of 2.5 g, followed by stirring at 40°C for 30 minutes, and then the magnesium sulfate was filtered out. The filtrate was cooled to 20°C, and 150 g of hexane was added to precipitate crystals, which were then filtered out. To the obtained crystals, 100 g of hexane was added and stirred, and then the mixture was filtered again and dried in vacuum to recover the crystals (Recovery Step 4: yield 85%).

Changes in the content of the reduced form of TEMPO after Step 1, Extraction Step 2, and Water-washing Step 3 are shown in Table 2.

**[Table 2]**

| Step | Content (mol%) of reduced form of TEMPO |
|---|---|
| After Step 1 | 5.0 |
| After Extraction Step 2 | 1.3 |
| After performing Water-washing Step 3 once | 0.6 |
| After performing Water-washing Step 3 three times | 0.1 |

### (Example 3)

Into a 50 mL three-neck flask, 2.5 g (0.06 mmol) of branched polyethylene glycol having a glycerol backbone and a molecular weight of 40,000, 98 mg (0.6 mmol) of TEMPO, 0.7 g of sodium bicarbonate, and 14 g of ion-exchanged water were charged and dissolved at 25°C under a nitrogen atmosphere. After cooling to 6°C, 191 mg of a sodium hypochlorite solution (available chlorine concentration 5.9%) was added dropwise, and an oxidation reaction was performed at 6°C for 3 hours. After the oxidation reaction, 14 mg of sodium isoascorbate was charged at 5°C and stirred for 10 minutes to quench the oxidation reaction (Step 1).

After the quenching, 3.9 g of refined salt was dissolved, and 3 mol/L sulfuric acid was added to adjust the pH to 1.0, and 13 g of toluene was added and stirred at 50°C for 30 minutes. After the separation into layers, a toluene layer was recovered, and 13 g of toluene was added to an aqueous layer again, followed by the same operation (Extraction Step 2).

The obtained toluene layers were combined and homogenized, and then 25 g of a 20% aqueous solution of sodium chloride having a pH adjusted to 3.0 with sulfuric acid was added, followed by stirring at 55°C for 30 minutes (Water-washing Step 3). After the separation into layers, the toluene layer was recovered and the water-washing step was repeated two more times in the same manner.

The toluene layer was recovered and distilled off, and then 25 g of ethyl acetate was added and dissolved at 40°C. Magnesium sulfate was added in an amount of 500 mg, followed by stirring at 40°C for 30 minutes, and then the magnesium sulfate was filtered out. The temperature of the solution was set to 40°C, followed by concentration and distillation to recover crystals (Recovery Step 4: yield 50%).

Changes in the content of the reduced form of TEMPO after Step 1, Extraction Step 2, and Water-washing Step 3 are shown in Table 3.

**[Table 3]**

| Step | Content (mol%) of reduced form of TEMPO |
|---|---|
| After Step 1 | 100 |
| After Extraction Step 2 | 8.3 |
| After performing Water-washing Step 3 once | 1.2 |
| After performing Water-washing Step 3 three times | 0.8 |

### (Example 4)

Into a 100 mL three-neck flask, 5 g (0.25 mmol) of multi-arm polyethylene glycol having a pentaerythritol backbone and a molecular weight of 20,000, 8 mg (0.05 mmol) of TEMPO, 1.4 g of sodium bicarbonate, and 28 g of ion-exchanged water were charged and dissolved at 25°C under a nitrogen atmosphere. After cooling to 6°C, 3 g of a sodium hypochlorite solution (available chlorine concentration 5.9%) was added dropwise, and an oxidation reaction was performed at 6°C for 3.5 hours. After the oxidation reaction, 108 mg of sodium isoascorbate was charged at 5°C and stirred for 10 minutes to quench the oxidation reaction (Step 1).

After the quenching, 85% phosphoric acid was added to adjust the pH to 3.0, and 25 g of chloroform was added, followed by stirring at 45°C for 30 minutes. After the separation into layers, a chloroform layer was recovered, and 13 g of chloroform was added to an aqueous layer again, followed by the same operation (Extraction Step 2).

The obtained chloroform layers were combined and homogenized, and then 25 g of an aqueous solution of phosphoric acid having a pH adjusted to 1.0 was added, followed by stirring at 45°C for 30 minutes (Water-washing Step 3).

The chloroform layer was recovered, and the chloroform was distilled off, and then 25 g of ethyl acetate was added and dissolved at 35°C. Magnesium sulfate was added in an amount of 500 mg, followed by stirring at 35°C for 30 minutes, and then the magnesium sulfate was filtered out. The temperature of the solution was set to 40°C, followed by concentration and distillation to recover crystals (Recovery Step 4: yield 91%).

Changes in the content of the reduced form of TEMPO after Step 1, Extraction Step 2, and Water-washing Step 3 are shown in Table 4.

**[Table 4]**

| Step | Content (mol%) of reduced form of TEMPO |
|---|---|
| After Step 1 | 20.0 |
| After Extraction Step 2 | 8.5 |
| After performing Water-washing Step 3 once | 0.5 |

### (Example 5)

Into a 100 mL three-neck flask, 5 g (0.25 mmol) of multi-arm polyethylene glycol having a pentaerythritol backbone and a molecular weight of 20,000, 8 mg (0.05 mmol) of TEMPO, 1.4 g of sodium bicarbonate, and 28 g of ion-exchanged water were charged and dissolved at 25°C under a nitrogen atmosphere. After cooling to 6°C, 3 g of a sodium hypochlorite solution (available chlorine concentration 5.9%) was added dropwise, and an oxidation reaction was performed at 6°C for 3.5 hours. After the oxidation reaction, 108 mg of sodium isoascorbate was charged at 5°C and stirred for 10 minutes to quench the oxidation reaction (Step 1).

After the quenching, 8.7 g of refined salt was dissolved, and phosphoric acid was added to adjust the pH to 3.0, and 25 g of toluene was added and stirred at 45°C for 30 minutes. After the separation into layers, a toluene layer was recovered, and 25 g of toluene was added to an aqueous layer again, followed by the same operation (Extraction Step 2).

The obtained toluene layers were combined and homogenized, and then 25 g of a 20% aqueous solution of sodium chloride having a pH adjusted to 1.0 with sulfuric acid was added, followed by stirring at 55°C for 30 minutes (Water-washing Step 3).

After the separation into layers, the toluene layer was recovered and the toluene was distilled off, and then 25 g of ethyl acetate was added and dissolved at 40°C. Magnesium sulfate was added in an amount of 500 mg, followed by stirring at 35°C for 30 minutes, and then the magnesium sulfate was filtered out. Concentration and distillation were performed at 40°C to recover crystals (Recovery Step 4: yield 85%).

Changes in the content of the reduced form of TEMPO after Step 1, Extraction Step 2, and Water-washing Step 3 are shown in Table 5.

**[Table 5]**

| Step | Content (mol%) of reduced form of TEMPO |
|---|---|
| After Step 1 | 20.0 |
| After Extraction Step 2 | 3.3 |
| After performing Water-washing Step 3 once | 0.5 |

Next, the pH of the aqueous layer during extraction and water-washing was adjusted to approximately 4, and the removal of the reduced form of TEMPO when Step 2 and Step 3 were performed was evaluated.

### (Comparative Example 1)

Into a screw-cap bottle, 1 g (0.5 mmol) of linear polyethylene glycol having a molecular weight of 2,000 and a hydroxyl group at one terminal and a methoxy group at the other terminal, 4 mg (0.6 mmol) of TEMPO, 0.3 g of sodium bicarbonate, and 5.6 g of ion-exchanged water were charged and heated under a nitrogen atmosphere, and dissolved at 40°C. A sodium hypochlorite solution (available chlorine concentration 5.9%) was charged in an amount of 1.5 g, and an oxidation reaction was performed at 10°C for 2 hours. After the oxidation reaction, 54 mg of sodium isoascorbate was charged at 10°C and stirred for 30 minutes to quench the oxidation reaction (Step 1).

After the quenching, 0.1 mol/L hydrochloric acid was added to adjust the pH to 4.1, and 5 g of chloroform was added and stirred at 25°C for 30 minutes. After the separation into layers, a chloroform layer was recovered, and 2.5 g of chloroform was added to an aqueous layer again, followed by the same operation (Extraction Step 2).

The obtained chloroform layers were combined and homogenized, and then 5 g of an aqueous solution of hydrochloric acid having a pH adjusted to 4.2 was added, followed by stirring at 25°C for 30 minutes. After the separation into layers, the chloroform layer was recovered (Water-washing Step 3). Step 3 was repeated two more times in the same manner.

The chloroform layer was recovered, and the chloroform was concentrated and distilled off to recover crystals (Recovery Step 4).

Changes in the content of the reduced form of TEMPO after Step 1, Extraction Step 2, and Water-washing Step 3 are shown in Table 6.

**[Table 6]**

| Step | Content (mol%) of reduced form of TEMPO |
|---|---|
| After Step 1 | 5.7 |
| After Extraction Step 2 | 5.7 |
| After Water-washing Step 3 | 5.7 |

As described above, even when Step 2 and Step 3 were performed with the pH of the aqueous layer adjusted to above 3, the reduced form of TEMPO could not be effectively reduced.

Next, as described in Patent Literature 2, it was investigated whether the reduced form of TEMPO can be removed by repeated reprecipitation by adding hexane, which is a poor solvent, to the polyethylene glycol derivative dissolved in heated ethyl acetate.

### (Comparative Example 2)

Into a 500 mL four-neck flask, 30 g (15 mmol) of linear polyethylene glycol having a molecular weight of 2,000 and a hydroxyl group at one terminal and a methoxy group at the other terminal, 118 mg (0.75 mmol) of TEMPO, 8.4 g of sodium bicarbonate, and 168 g of ion-exchanged water were charged, heated under a nitrogen atmosphere, and dissolved at 40°C. Over 30 minutes, 47 g of a sodium hypochlorite solution (available chlorine concentration 5.9%) was added dropwise, and an oxidation reaction was performed at 40°C for 2 hours. After the oxidation reaction, 1.5 g of sodium ascorbate was charged at 22°C, and the mixture was stirred for 30 minutes to quench the oxidation reaction (Step 1).

After the quenching, 6 mol/L hydrochloric acid was added to adjust the pH to 2.0, and 150 g of chloroform was added and stirred at 22°C for 15 minutes. After the separation into layers, a chloroform layer was recovered, and 150 g of chloroform was added to an aqueous layer again, followed by the same operation (Extraction Step 2).

The obtained chloroform layers were homogenized, and the chloroform was then distilled off, followed by adding 77 g of ethyl acetate and dissolving at 40°C. Magnesium sulfate was added in an amount of 3.0 g, followed by stirring at 40°C for 30 minutes, and then the magnesium sulfate was filtered out. The filtrate was cooled to 25°C, and 180 g of hexane was added to precipitate crystals, which were then filtered out. To the obtained wet crystals, 125 g of ethyl acetate was added, and the crystals were dissolved at 40°C. After cooling to 20°C, 63 g of hexane was added to precipitate crystals, which were then filtered off. The same operation was repeated twice, and 100 g of hexane was added to the obtained wet crystals, followed by stirring, and then filtered again, and dried in vacuum to recover the crystals (yield 69%).

A change in the content of the reduced form of TEMPO during repeated reprecipitation is shown in Table 7.

**[Table 7]**

| Step | Content (mol%) of reduced form of TEMPO |
|---|---|
| Before reprecipitating | 2.9 |
| After reprecipitating once | 2.0 |
| After reprecipitating twice | 2.1 |
| After reprecipitating three times | 1.7 |

### (Comparative Example 3)

Into a 100 mL three-neck flask, 5 g (0.25 mmol) of multi-arm polyethylene glycol having a pentaerythritol backbone and a molecular weight of 20,000, 8 mg (0.05 mmol) of TEMPO, 1.4 g of sodium bicarbonate, and 28 g of ion-exchanged water were charged and dissolved at 25°C under a nitrogen atmosphere. After cooling to 6°C, 3 g of a sodium hypochlorite solution (available chlorine concentration 5.9%) was added dropwise, and an oxidation reaction was performed at 6°C for 3.5 hours. After the oxidation reaction, 108 mg of sodium isoascorbate was charged at 5°C and stirred for 10 minutes to quench the oxidation reaction (Step 1).

After the quenching, 85% phosphoric acid was added to adjust the pH to 3.0, and 25 g of chloroform was added, followed by stirring at 45°C for 30 minutes. After the separation into layers, a chloroform layer was recovered, and 13 g of chloroform was added to an aqueous layer again, followed by the same operation (Extraction Step 2).

The obtained chloroform layers were combined and homogenized, and the chloroform was then distilled off, followed by adding 30 g of ethyl acetate and dissolving at 35°C. Magnesium sulfate was added in an amount of 500 mg, followed by stirring at 35°C for 30 minutes, and then the magnesium sulfate was filtered out. To the obtained filtrate, 15 g of hexane was added to precipitate crystals, which were then filtered off. The obtained wet crystals were dissolved in 30 g of ethyl acetate, and crystallization was repeated twice under the same conditions. To the obtained wet crystals, 20 g of hexane was added and stirred, and then the mixture was filtered again and dried in vacuum to recover the crystals (yield 83%).

A change in the content of the reduced form of TEMPO during repeated reprecipitation is shown in Table 8.

**[Table 8]**

| Step | Content (mol%) of reduced form of TEMPO |
|---|---|
| Before reprecipitating | 8.5 |
| After reprecipitating once | 8.1 |
| After reprecipitating twice | 3.2 |
| After reprecipitating three times | 3.3 |

As described above, even after the third reprecipitation, the reduction in the reduced form of TEMPO had almost reached a plateau, and the effect was limited.

Next, as described in Patent Literature 1, it was investigated whether the reduced form of TEMPO could be removed by washing the mixed aqueous solution obtained by the oxidation reaction using TEMPO with an organic solvent (ethyl acetate).

### (Comparative Example 4)

1 g (0.5 mmol) of linear polyethylene glycol having a molecular weight of 2,000 and a hydroxyl group at one terminal and a methoxy group at the other terminal, 4 mg (0.025 mmol) of TEMPO, 280 mg of sodium bicarbonate, and 6 g of ion-exchanged water were charged and heated under a nitrogen atmosphere, and dissolved at 35°C. A sodium hypochlorite solution (available chlorine concentration 5.9%) was charged dropwise in an amount of 1.5 g, and an oxidation reaction was performed at 10°C for 2 hours. After the oxidation reaction, 54 mg of sodium isoascorbate was charged at 10°C and stirred for 5 minutes to quench the oxidation reaction (Step 1).

After the quenching, 6 mol/L hydrochloric acid was added to adjust the pH to 1.0, and 9 g of ethyl acetate was added, followed by stirring at 25° C. for 30 minutes.

A change in the content of the reduced form of TEMPO before and after the washing with ethyl acetate is shown in Table 9.

**[Table 9]**

| Step | Content (mol%) of reduced form of TEMPO |
|---|---|
| Before washing with ethyl acetate | 5.0 |
| After washing with ethyl acetate | 5.0 |

In the present example, no reduction in the content of the reduced form of TEMPO was confirmed.

As described above, the present invention is a useful purification method by which the content of the reduced form of the N-oxyl compound contained in the polyethylene glycol derivative having a carboxyl group at the terminal can be reduced by washing with water, which is preferable for industrial production, and a polyethylene glycol derivative having a low content of the reduced form of the N-oxyl compound can be obtained.

### INDUSTRIAL APPLICABILITY

The present invention is particularly suitable for pharmaceutical use, including modification of polypeptides, enzymes, antibodies, and other low-molecular-weight drugs, nucleic acid compounds including genes and oligonucleic acids, nucleic acid drugs, and other biologically active substances, or applications to drug delivery system carriers such as liposomes, polymer micelles, and nanoparticles.

Although the present invention has been described in detail and with reference to specific embodiments, it will be apparent to those skilled in the art that various changes and modifications can be made without departing from the spirit and scope of the present invention.

The present application is based on a Japanese patent application (Japanese Patent Application No. 2023-164163) filed on September 27, 2023, the contents of which are incorporated herein by reference.

## Claims

1. A method for producing a polyethylene glycol derivative having a carboxyl group at a terminal thereof, the method comprising the following Step 1, Step 2, Step 3 and Step 4:
Step 1:
a step of subjecting a polyethylene glycol compound having a molecular weight of 1,000 to 80,000 and having a hydroxyl group or an aldehyde group at a terminal thereof to an oxidation reaction using an N-oxyl compound to obtain a polyethylene glycol derivative having a carboxyl group at a terminal thereof, and then quenching the oxidation reaction by adding a reducing agent to obtain a mixed aqueous solution containing a reduced form of the N-oxyl compound and the polyethylene glycol derivative having a carboxyl group at the terminal;
Step 2:
an extraction step of mixing the mixed aqueous solution adjusted to pH 3.0 or less with an organic solvent containing one or more selected from the group consisting of aromatic hydrocarbon, carboxylic acid alkyl ester, and halogenated hydrocarbon at a condition of 0°C or higher, so as to separate into an organic layer and an aqueous layer;
Step 3:
a water-washing step of mixing the organic layer obtained in the Step 2 with an aqueous solution having a pH adjusted to 3.0 or less at a condition of 0°C or higher, so as to separate into an organic layer and an aqueous layer; and
Step 4:
a recovery step of recovering the polyethylene glycol derivative having a carboxyl group at the terminal by concentrating the organic layer obtained in the Step 3.

2. The method according to claim 1, wherein
the polyethylene glycol derivative having a carboxyl group at the terminal is a linear polyethylene glycol, a branched polyethylene glycol, or a multi-arm polyethylene glycol.

3. The method according to claim 1 or 2, wherein
an average molecular weight of the polyethylene glycol derivative having a carboxyl group at the terminal is 1,000 to 80,000.

4. The method according to claim 1 or 2, wherein
an acid used to adjust the pH of the mixed aqueous solution in the Step 2 and the aqueous solution in the Step 3 is an acid having an octanol-water partition coefficient of 0.5 or less and a pKa of 6 or less.
